# EUROPEAN PATENT APPLICATION

(11) **EP 3 261 326 A1**
(43) Date of publication of application: **27.12.2017**
(21) Application number: 15882732.9
(22) Date of filing: 10.12.2015
(51) Int. Cl.: H04M 3/42, G06F 13/00, H04L 12/701, H04M 3/00, H04M 11/00

(54) **COMMUNICATION SYSTEM AND COMMUNICATION METHOD**

(30) Priority: 17.02.2015 JP 2015028333
(71) Applicant: NEC Corporation, Tokyo 108-8001 (JP)
(72) Inventor: MASUDA, Shinji, Tokyo 108-8001 (JP); KUMAGAI, Tomonori, Tokyo 108-8001 (JP); TAMURA, Toshiyuki, Tokyo 108-8001 (JP)
(74) Representative: Robson, Aidan John
(86) International application number: PCT/JP2015/084615
(87) International publication number: WO 2016/132631

(57) **Abstract**

A communication system (1) includes an intervention apparatus (10) that performs a predetermined process on a main content that is exchanged between endpoint apparatus, and an intervention control unit (20) that controls whether or not to cause the intervention apparatus to perform the predetermined process on the main content that is exchanged between a first endpoint apparatus and a second endpoint apparatus.

## Description

### TECHNICAL FIELD

The present invention relates to a communication technology.

### BACKGROUND ART

Various technologies have been developed for improvement in the performance or quality of communication in communication networks. Further, physical layers, communication protocols, and communication interface functions on the endpoint user side have been improved in performance. For example, Patent Document 2 below proposes a method of reducing the time and cost for communication and securing safety in communication by selecting an optimal communication unit in accordance with the communication contents. In this method, an apparatus that relays data communication between communication apparatuses instructs a communication apparatus to switch communication units for transferring the data communication contents in accordance with properties (data size, confidentiality, or the like) of the contents.

Further, various communication service functions such as a voice dialogue function or a spam telephone call blocking function are being provided. Patent Document 1 below proposes a voice dialog method of automatically controlling the timing for an operator to intervene, in correspondence with the user's knowledge level. In this method, a dialogue is performed by replying to the speech of the user with a synthetic voice (machine voice) based on a knowledgebase in a knowledge database. The contents of the user's speech in the dialogue are analyzed, and the magnitude of deviation between the knowledge base in the knowledge database and the user's knowledge level is analyzed. In a case where the deviation is large, an assistant operator terminal is connected to the user terminal. Patent Document 3 below proposes a method of efficiently blocking a spam telephone call. In this method, before a telephone call is connected to a called party, a Spam over Internet Telephony (SPIT) filter receives a call setup request from the caller. The caller is checked using a whitelist, a blacklist, and a greylist. If the caller is whitelisted, the call is directly connected to the called party. If the caller is blacklisted, the call is rejected. Otherwise, a test is executed. In order to perform the test, the filter receives the call, and a voice message is transmitted to the caller. A reply from the caller is analyzed to determine whether or not the caller has passed the test. If the caller has passed, the call is connected to the called party. If the caller failed the test, the call is rejected.

### RELATED DOCUMENT

### PATENT DOCUMENT

[Patent Document 1] Japanese Unexamined Patent Application Publication No. 2002-202882
[Patent Document 2] Japanese Unexamined Patent Application Publication No. 2004-062342
[Patent Document 3] Japanese Unexamined Patent Application Publication No. 2007-6467

### SUMMARY OF THE INVENTION

### TECHNICAL PROBLEM

In recent years, the keywords "Internet of things" have been attracting attention. With a further spread of the Internet, it is expected that not only user terminals such as personal computers (PCs) or smart phones but also various things existing in the world such as devices, objects, or equipment will be connected to the Internet to communicate with each other.

The present inventors have been inspired of the idea that future communications will require not only development in transfer capabilities or the like but also in intellectualization of communication networks. Intellectualization of a communication network refers to the communication network itself having certain intellectual capabilities. The present inventors considered that by adding intellectual capabilities to a communication network, a further added value can be provided to each user without depending only on the functions of each endpoint user terminal. However, no specific proposals have been made up to the present for adding intellectual capabilities to communication networks.

The present invention has been made in view of such circumstances, and provides a technology for intellectualizing a communication network.

### SOLUTION TO PROBLEM

In each aspect of the present invention, each of the following configurations is adopted in order to solve the above-mentioned problem.

A first aspect relates to a communication system. A communication system according to a first aspect includes an intervention apparatus that performs a predetermined process on a main content that is exchanged between endpoint apparatuses; and an intervention control unit that controls whether or not to cause the intervention apparatus to perform the predetermined process on the main content that is exchanged between a first endpoint apparatus and a second endpoint apparatus.

A second aspect relates to a communication method that is executed by a communication system including an intervention apparatus that performs a predetermined process on main content that is exchanged between endpoint apparatus. The communication method according to the second aspect includes controlling whether or not to cause the intervention apparatus to perform the predetermined process on the main content that is exchanged between a first endpoint apparatus and a second endpoint apparatus.

Note that another aspect of the present invention is a program that causes at least one apparatus included in the communication system to execute the method of the second aspect. Further, the other aspect is a computer-readable recording medium recording such a program. The recording medium includes a non-transitory tangible medium.

### ADVANTAGEOUS EFFECTS OF THE INVENTION

According to each of the above aspects, it is possible to provide a technology for achieving intellectualization of a communication network.

### BRIEF DESCRIPTION OF THE DRAWINGS

The foregoing and other objects, characteristics, and advantages will become more apparent from preferred exemplary embodiments to be described below and the accompanying drawings below.

FIG. 1 is a diagram conceptually illustrating a communication system according to a first exemplary embodiment.
FIG. 2 is a diagram conceptually illustrating a processing configuration example of the communication system according to the first exemplary embodiment.
FIG. 3 is a flowchart illustrating an operation example of the communication system according to the first exemplary embodiment.
FIG. 4 is a diagram illustrating an example of an intervention control method.
FIG. 5 is a diagram illustrating an example of an intervention control method.
FIG. 6 is a diagram conceptually illustrating a processing configuration example of a communication system according to a second exemplary embodiment.
FIG. 7 is a flowchart illustrating an operation example of the communication system according to the second exemplary embodiment.
FIG. 8 is a diagram conceptually illustrating a processing configuration example of a communication system according to a third exemplary embodiment.
FIG. 9 is a flowchart illustrating an operation example of the communication system according to the third exemplary embodiment.
FIG. 10 is a diagram conceptually illustrating a processing configuration example of a communication system according to a fourth exemplary embodiment.
FIG. 11 is a flowchart illustrating an operation example of the communication system according to the fourth exemplary embodiment.
FIG. 12 is a diagram conceptually illustrating a communication system according to Example 1.
FIG. 13 is a diagram conceptually illustrating a communication system according to Example 2.
FIG. 14 is a diagram conceptually illustrating a communication system according to Example 3.
FIG. 15 is a diagram conceptually illustrating a communication system according to Example 4.
FIG. 16 is a diagram conceptually illustrating a communication system in a modification example of Example 4.
FIG. 17 is a diagram conceptually illustrating a communication system according to Example 5.
FIG. 18 is a diagram conceptually illustrating a communication system according to Example 6.

### DESCRIPTION OF EMBODIMENTS

Hereinafter, exemplary embodiments of the present invention will be described. Note that each of the following exemplary embodiments is an example, and the present invention is not limited to a configuration of each of the following exemplary embodiments.

### [First Exemplary Embodiment]

### <System configuration>

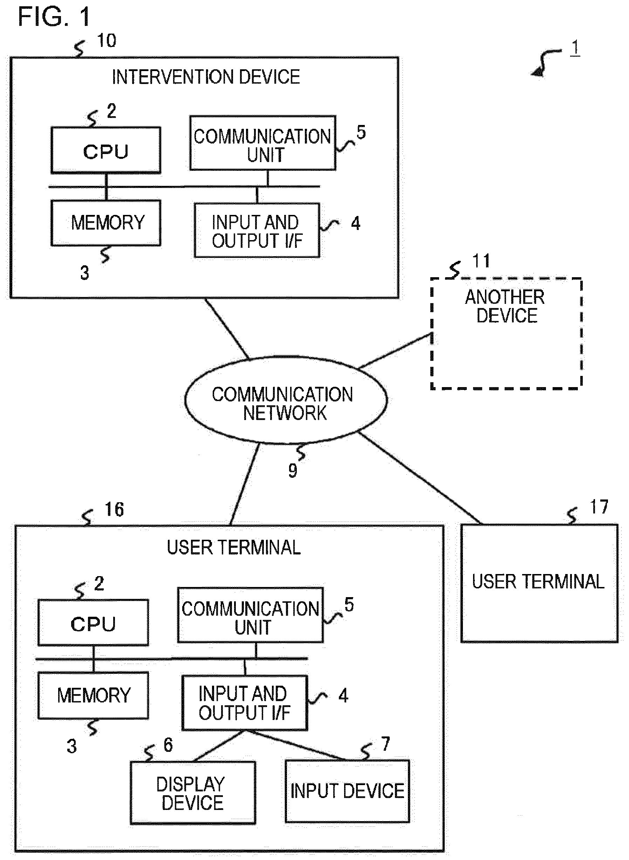

FIG. 1 is a diagram conceptually illustrating a communication system according to a first exemplary embodiment. As illustrated in FIG. 1, the communication system 1 at least includes an intervention apparatus 10. However, as indicated by a broken line in FIG. 1, the communication system 1 may further include another apparatus 11, in addition to the intervention apparatus 10. Further, the communication system 1 may be defined as including user terminals 16 and 17 which are endpoint apparatuses for exchanging a main content.

The intervention apparatus 10, the other apparatus 11, and the user terminals 16 and 17 are so-called computers, each including, for example, a central processing unit (CPU) 2, a memory 3, an input and output interface (I/F) 4, and a communication unit 5, which are connected by a bus. Since the user terminals 16 and 17 are endpoint apparatuses in the communication of the main content, the user terminals 16 and 17 include various user interfaces, such as a display apparatus 6 and an input apparatus 7. However, the intervention apparatus 10 and the other apparatus 11 may also include various user interfaces, similar to the user terminals 16 and 17. Further, since FIG. 1 is a conceptual diagram, the number of each type of hardware element is not limited to the number illustrated in FIG. 1. For example, the intervention apparatus 10 may include plural CPUs 2 and plural memories 3.

The CPU 2 includes, for example, an application specific integrated circuit (ASIC), a digital signal processor (DSP), and a graphics processing unit (GPU), in addition to a general CPU.

The memory 3 is a random access memory (RAM), a read only memory (ROM), or an auxiliary storage apparatus (hard disk and the like).

The input/output I/F 4 is connectable to the user interface apparatus such as the display apparatus 6 and the input apparatus 7. The display apparatus 6 is an apparatus that displays a screen corresponding to drawing data processed by the CPU2 or the like, such as a liquid crystal display (LCD) or a cathode ray tube (CRT) display. The input apparatus 7 is an apparatus that receives an input of a user operation, such as a keyboard, a mouse, or the like. The display apparatus 6 and the input apparatus 7 may be integrated and implemented as a touch panel.

The communication unit 5 communicates with other computers through a communication network 9, exchanges signals with other devices, and the like. A portable recording medium or the like may also be connected to the communication unit 5. The intervention apparatus 10, the other apparatus 11, the user terminals 16 and 17 may include hardware elements not illustrated in FIG. 1, and the hardware configuration of each apparatus is not limited.

The communication network 9 includes at least one type of a network such as the Internet, a public network such as the public switched telephone networks (PSTN), a portable telephone network, a mobile communication network, a wide area network (WAN), a local area network (LAN), and a wireless communication network. In the present exemplary embodiment, the form of communication is not limited as long as the user terminal 16 and the user terminal 17 are capable of performing communication.

The user terminals 16 and 17 exchange a main content over the communication network 9. The main content refers to information that is exchanged between endpoints and is distinguished from control information that is transmitted for causing the endpoints to exchange such information therebetween. For example, in a case where the main content is a voice that is exchanged using Voice over Internet Protocol (VoIP), the main content is distinguished from a Session Initiation Protocol (SIP) message for enabling a call for the voice. The data type of the main content is a voice, an image (still image or moving image), a text, or the like, and is not limited. Further, the medium type of the main content includes a voice call, a video call, an e-mail, a chat, data communication, social media, and the like, and is not limited.

Further, although the user terminals are exemplified as the endpoint apparatuses that exchange the main content in FIG. 1, the endpoint apparatus may be any apparatus or device and does not need to be an apparatus directly operated by the user, as long as it has a communication function.

The intervention apparatus 10 performs a predetermined process on the main content that is exchanged between the user terminal 16 and the user terminal 17 serving as endpoints. Specifically, the intervention apparatus 10 performs a predetermined process on a part or all of the main content. The intervention apparatus 10 may perform the predetermined process only on a content transmitted from one endpoint among the exchanged main contents. The predetermined process executed by the intervention apparatus 10 is not particularly limited as long as it is applied to the main content. The predetermined process includes a main content analysis process such as voice recognition, voice analysis (frequency analysis or the like), image recognition, image analysis, language analysis (morpheme analysis, semantic analysis, or the like), or main content processing such as voice processing, for example, voice masking or voice synthesis, image processing, or text editing such as text filtering. In this exemplary embodiment, the predetermined process is not limited. Hereinafter, "the intervention apparatus 10 performs a predetermined process on the main content" may be described as "the intervention apparatus 10 intervenes in the main content" in some cases.

### [Processing Configuration]

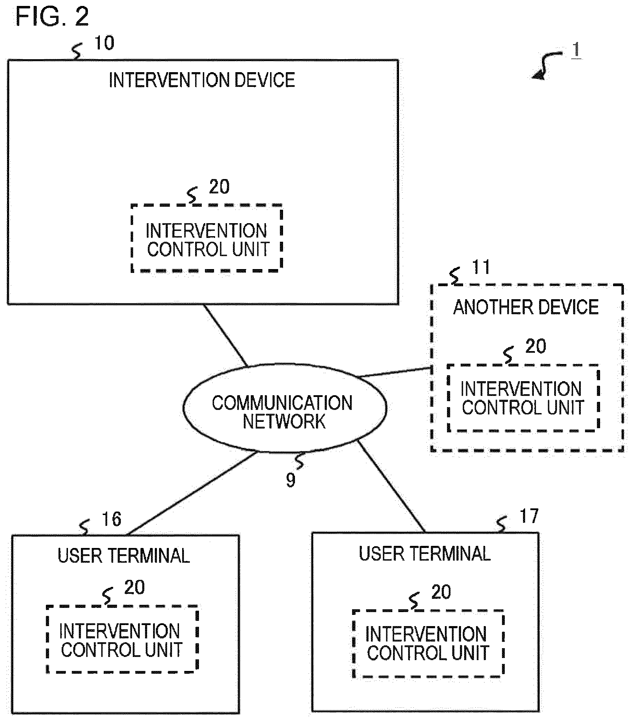

FIG. 2 is a diagram conceptually illustrating a processing configuration example of the communication system 1 according to the first exemplary embodiment. The communication system 1 further includes an intervention control unit 20 in at least one (any one, any plurality, or all) of the intervention apparatus 10, the other apparatus 11, and the user terminals 16 and 17. The intervention control unit 20 may be implemented as a hardware component, may be implemented as a software component, or may be implemented by a combination of the hardware component and the software component. The hardware component is, for example, a hardware circuit such as the CPU 2, the memory 3, a gate array, a combination of logic gates, a signal processing circuit, or an analog circuit. The software component is a software component (fragment) such as a task, a process, or a function that is implemented by the CPU 2 executing data (program) in the memory 3.

The intervention control unit 20 controls whether or not to cause the intervention apparatus 10 to perform the predetermined process on the main content that is exchanged between the user terminal 16 and the user terminal 17. By the intervention control, the main content is processed or not processed by the intervention apparatus 10 during the exchange between the user terminal 16 and the user terminal 17. A specific intervention control method by the intervention control unit 20 will be described below.

The intervention control unit 20 may determine whether or not to cause the intervention apparatus 10 to perform the predetermined process on the main content that is exchanged between the user terminal 16 and the user terminal 17 based on the presence or absence of a notification from the user terminal 16 or the user terminal 17. Further, the intervention control unit 20 may perform the determination according to various conditions described in the second, third and fourth exemplary embodiments.

### [Communication Method/Operation Example]

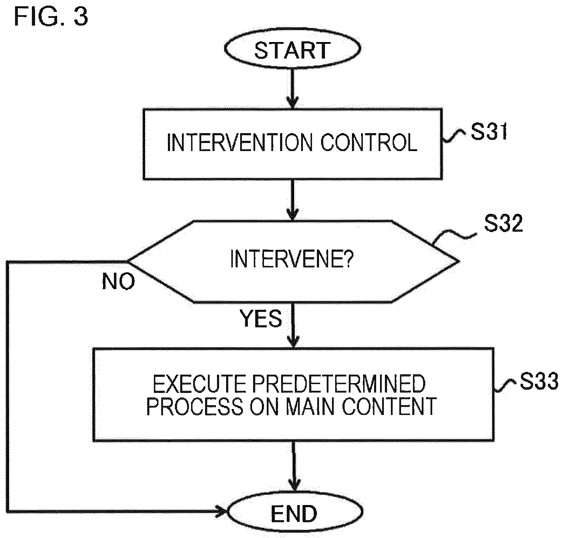

Next, a communication method in the first exemplary embodiment will be described with reference to FIG. 3. FIG. 3 is a flowchart illustrating an operation example of the communication system 1 according to the first exemplary embodiment. As illustrated in FIG. 3, the communication method in the first exemplary embodiment is executed by the communication system 1 in the first exemplary embodiment. Each step is executed by any one of the intervention apparatus 10, the other apparatus 11, and the user terminals 16 and 17 included in the communication system 1.

The communication method according to the first exemplary embodiment includes controlling whether or not to cause the intervention apparatus 10 to perform the predetermined process on the main content that is exchanged between the user terminal 16 and the user terminal 17 (S31: intervention control). As described above, the intervention control may be executed based on the presence or absence of the notification from the user terminal 16 or the user terminal 17.

In (S31), when the intervention apparatus 10 is controlled to intervene in the main content (S32; YES), the intervention apparatus 10 executes the predetermined process on the main content that is exchanged between the user terminal 16 and the user terminal 17 (S33). On the other hand, when the intervention apparatus 10 is controlled not to intervene in the main content in (S31) (S32; NO), the predetermined process is not executed on the main content.

The first exemplary embodiment may be a program causing a computer to execute the above-described communication method or may be a computer-readable recording medium recording such a program.

### [Advantageous Effect in First Exemplary Embodiment]

As described above, in the first exemplary embodiment, whether or not to cause the intervention apparatus 10 to perform the predetermined process on the main content that is exchanged between the user terminal 16 and the user terminal 17 is controlled. Accordingly, under certain conditions, the main content is exchanged between the user terminals 16 and 17 without any processing on the main content, as in the related art. Alternatively, under certain conditions, the intervention apparatus 10 executes the predetermined process on the exchanged main content. As described above, the intervention apparatus 10 intervenes in the main content, and thereby an added value (additional service) may be provided to the endpoint (each user of the user terminals 16 and 17). Further, according to the first exemplary embodiment, since the intervention apparatus 10 may be caused to intervene in the main content only when necessary, it is possible to make the apparatus (system resource) more efficient and reduce problems in privacy.

Various application examples can be considered for the added value that is provided to the endpoint. For example, a detection process of detecting maliciousness from the main content is executed as the predetermined process. In this case, by providing a result of the detection to one endpoint user, the user can avoid damage such as unscrupulous solicitations or wire transfer frauds. Further, the detection result may be sent to a security company or the police. Accordingly, criminals may feel threatened to commit malicious acts in a communication with the user, thus providing new security and safety to the user in the communication of the main content. Further, when the predetermined process is extracting interests of users or trends from the main content, the added value may be used not only for users of the communication but also for marketing of other companies, or the like. In this exemplary embodiment, the content of the predetermined process in the intervention apparatus 10 is not limited, and a method of using information obtained by executing the predetermined process is also not limited.

### <Intervention Control Method>

Hereinafter, the intervention control method in the intervention control unit 20 will be described in greater detail.

As an example of the intervention control method, the intervention apparatus 10 can control whether or not to cause the intervention apparatus 10 to perform a predetermined process on the main content that is exchanged between the user terminal 16 and the user terminal 17 by changing a transfer path of a part or all of the main content. The "transfer path" used herein refers to a path via which a part or all of the main content is transferred, and includes "a communication path for exchanging the main content between the user terminal 16 and the user terminal 17" and "a path via which the main content is transferred, other than the communication path". In the example of FIG. 1, the "transfer path" is formed on the communication network 9.

Specifically, for intervention control, the intervention control unit 20 determines a communication path, in which the main content is exchanged between the user terminal 16 and the user terminal 17, to be any one of a communication path intervened by the intervention apparatus 10 and a communication path not intervened by the intervention apparatus 10. Here, "the communication path in which the main content is exchanged between the user terminal 16 and the user terminal 17" may be a connection path that allows to determine whether or not there is intervention of the intervention apparatus 10 that performs the predetermined process on the main content. That is, a server apparatus other than the intervention apparatus 10 may intervene in the communication path. For example, in a case where the main content is an e-mail, one or more mail servers intervene in the communication path. Further, in a case where the main content is a VoIP call voice, one or more SIP servers intervene in the communication path. As an example, the wording "the communication path in which the main content is exchanged between the user terminal 16 and the user terminal 17" indicates a connection at a session layer or higher of an Open Systems Interconnection (OSI) reference model and can be used so as to be distinguished from a communication path including a relay apparatus such as a an L2 switch or a router (L3 switch).

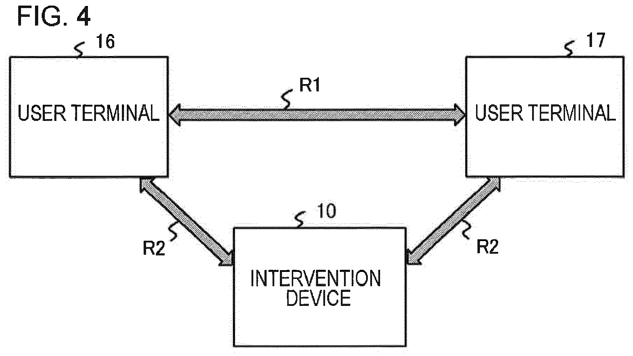

FIG. 4 is a diagram illustrating an example of an intervention control method. In FIG. 4, the communication path intervened by the intervention apparatus 10 is indicated by R2, and the communication path not intervened by the intervention apparatus 10 is indicated by R1.

The intervention control unit 20 performs control so that all or a part of the main content is exchanged through the communication path determined as described above. This control yields any one of a state of exchanging the main content in the communication path R1 and a state of exchanging the main content in the communication path R2. However, the communication path R2 may be used as the communication path for exchanging a part (for example, a content transmitted from one endpoint) of the main content, and the communication path R1 may be used as the communication path for the remaining part. A specific example of control of such a communication path will be described below as an exemplary embodiment.

Further, the intervention control unit 20 determines whether or not to cause one or both of the user terminals 16 and 17 to transfer the main content to be exchanged, to the intervention apparatus 10 for intervention control.

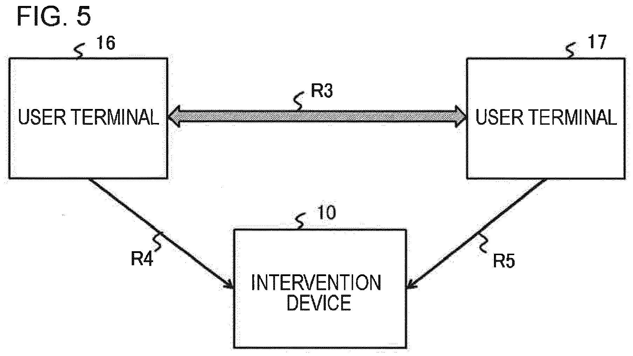

FIG. 5 is a diagram illustrating an example of an intervention control method. In this method, the user terminal 16 and the user terminal 17 exchange the main content through a communication path R3. In a case where the intervention control unit 20 determines to transfer the main content, the intervention control unit 20 performs control so that either the user terminal 16 transfers the main content exchanged in the communication path R3 to the intervention apparatus 10 through the transfer path R4, or the user terminal 17 transfers the main content to the intervention apparatus 10 through the transfer path R5, or both. In this case, the main content transferred by the user terminal 16 to the intervention apparatus 10 may only be the main content transmitted from the user terminal 17. Similarly, the main content transferred by the user terminal 17 to the intervention apparatus 10 may only be the main content transmitted by the user terminal 16. A specific example of such intervention control will also be described below as an example.

As another example of the intervention control method, the intervention control unit 20 is also capable of performing the following control. The intervention control unit 20 controls whether or not to cause the intervention apparatus 10 to perform the predetermined processing on the main content exchanged between the terminals 16 and 17 by selecting any one of: exchanging the main content in a superimposed manner in a first communication path intervened by the intervention apparatus 10 connecting the user terminal 16 and the user terminal 17 and a second communication path connecting the terminals 16 and 17 not intervened by the intervention apparatus 10; and exchanging the main content only in the second communication path. In the example of FIG. 4, the first communication path is indicated by R2 and the second communication path is indicated by R1. The above yields any one of a state of exchanging the main content in the communication paths R1 and R2 in a superimposed manner and a state of exchanging the main content only in the communication path R1.

In the second, third, and fourth exemplary embodiments below, conditions for determining whether or not to cause the intervention apparatus 10 to intervene in the main content are exemplified. In the following description, contents different from that of the first exemplary embodiment described above will be mainly described and the same contents as that of the first exemplary embodiment will not be repeated.

### [Second Exemplary Embodiment]

### [Processing Configuration]

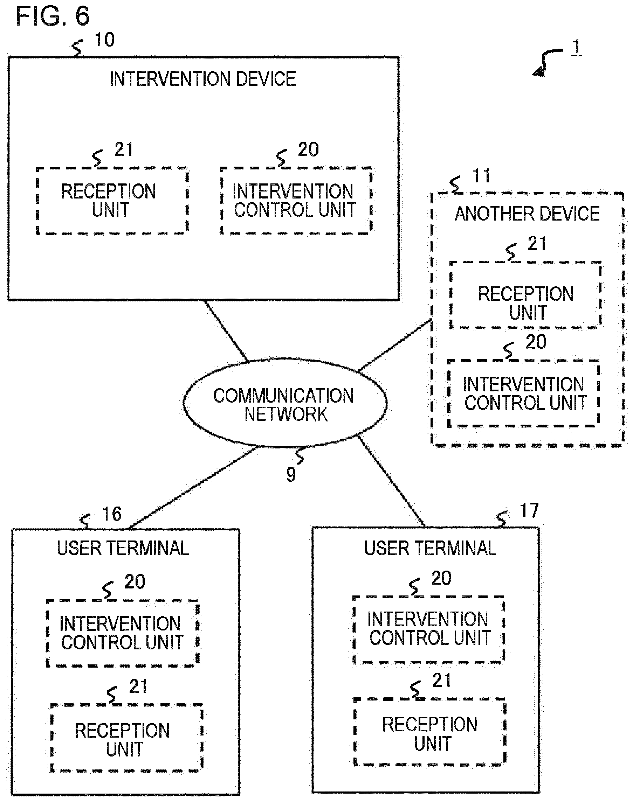

FIG. 6 is a diagram conceptually illustrating a processing configuration example of a communication system 1 in a second exemplary embodiment. The communication system 1 further includes an intervention control unit 20 provided in at least one (any one, any plurality, or all) of the intervention apparatus 10, the other apparatus 11, and the user terminals 16 and 17, and a reception unit 21. The reception unit 21 and the intervention control unit 20 may be included in different apparatuses. The reception unit 21 is implemented similarly to the intervention control unit 20.

The reception unit 21 receives communication control information for establishing a communication path for exchanging the main content between the user terminal 16 and the user terminal 17. The received communication control information is information included in a communication request message that is transmitted from the user terminal 16 or the user terminal 17. For example, the communication control information is identification information (telephone number, e-mail address, user ID, or the like) of a request source, identification information (telephone number, e-mail address, user ID, or the like) of a request destination, or the like.

The intervention control unit 20 determines whether or not to cause the intervention apparatus 10 to perform the predetermined process on the main content based on the communication control information received by the reception unit 21. The intervention control unit 20 performs the above-described intervention control according to the determination. Specifically, the intervention control unit 20 holds a whitelist or a blacklist of a request source or a request destination to collate the communication control information received by the reception unit 21 with the whitelist or the blacklist. The intervention control unit 20 is capable of determining whether or not to cause the intervention apparatus 10 to perform the predetermined process based on a result of the collation. For example, in a case where the telephone number of the request source indicated by the received communication control information is not whitelisted or in a case where the telephone number is blacklisted, the intervention control unit 20 determines to cause the intervention apparatus 10 to intervene in the main content. A method of using the communication control information and a method of determination in the intervention control unit 20 are not limited.

### [Communication Method/Operation Example]

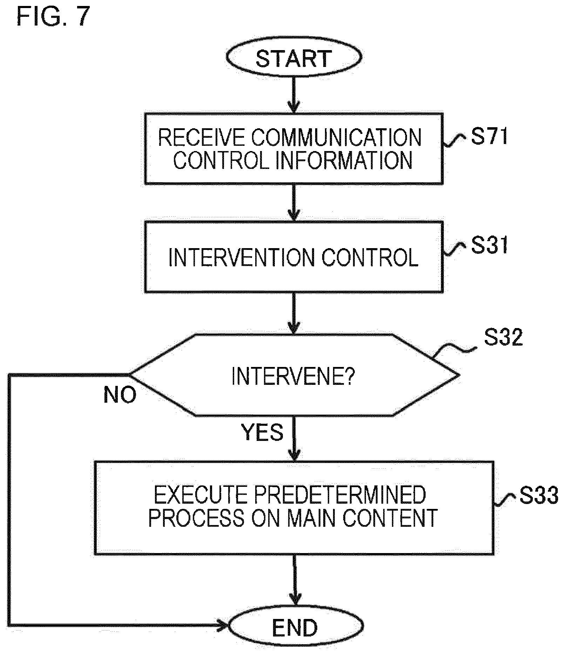

Hereinafter, the communication method in the second exemplary embodiment will be described with reference to FIG. 7. FIG. 7 is a flowchart illustrating an operation example of the communication system 1 in the second exemplary embodiment. As illustrated in FIG. 7, the communication method in the second exemplary embodiment is executed by the communication system 1 according to the second exemplary embodiment. Each step is executed by any one of the intervention apparatus 10, the other apparatus 11, and the user terminals 16 and 17 included in the communication system 1.

The communication method according to the second exemplary embodiment further includes receiving communication control information for establishing a communication path for exchanging the main content between the user terminal 16 and the user terminal 17 (S71). In (S31), intervention control is performed based on the communication control information received in (S71). Specific contents of (S71) and (S31) are the same as the contents described above for the reception unit 21 and the intervention control unit 20.

### [Advantageous Effect according to the Second Exemplary Embodiment]

As described above, in the second exemplary embodiment, whether or not to cause the intervention apparatus 10 to perform the predetermined process on the main content that is exchanged between the user terminal 16 and the user terminal 17 is controlled based on the communication control information for establishing a communication path for exchanging the main content between the user terminal 16 and the user terminal 17. Since the communication control information includes identification information of the endpoint such as a media access control (MAC) address, an Internet Protocol (IP) address of the user terminal, identification information and telephone number or the like of an endpoint, whether or not to cause the intervention apparatus 10 to intervene may be determined according to the endpoint.

### [Third Exemplary Embodiment]

### [Processing Configuration]

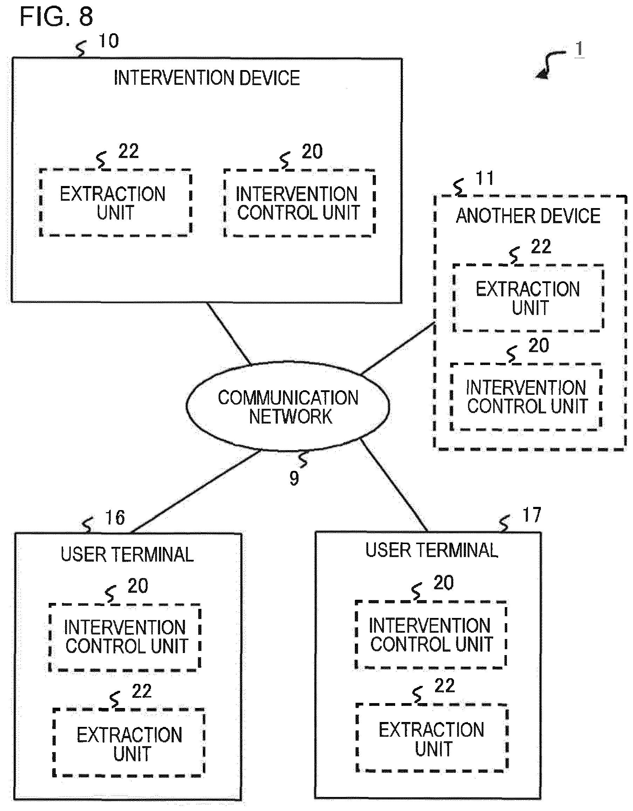

FIG. 8 is a diagram conceptually illustrating a processing configuration example of a communication system 1 according to a third exemplary embodiment. The communication system 1 further includes an extraction unit 22 in addition to the intervention control unit 20 provided in at least one (any one, any plurality, or all) of the intervention apparatus 10, the other apparatus 11, and the user terminals 16 and 17. The extraction unit 22 and the intervention control unit 20 may be included in different apparatuses. The extraction unit 22 is implemented similarly to the intervention control unit 20.

The extraction unit 22 extracts secondary content information from the main content. An example of the secondary content information is described below. However, the content of the secondary content information is not limited as long as the secondary content information is extracted from the main content.

In a case where the main content includes a voice, the secondary content information indicates feature information of the voice, such as the pitch, tone, volume, intonation, and emotion obtained through voice analysis. In this case, the secondary content information may indicate a word obtained through voice recognition. In a case where the main content includes an image, the secondary content information indicates at least one of, for example, a feature amount of the image obtained through image analysis, and object information obtained through image recognition. In a case where the main content includes text data, the secondary content information indicates at least one of, for example, a word obtained using language processing, and a degree of danger or emotion obtained from the word or the like.

A well-known technology may be used for the extraction process of the extraction unit 22 according to the contents of the secondary content information to be extracted.

The intervention control unit 20 determines whether or not to cause the intervention apparatus 10 to perform the predetermined process on the main content based on the secondary content information extracted by the extraction unit 22. The intervention control unit 20 performs the above-described intervention control according to the determination. Specifically, the intervention control unit 20 holds a list of words spoken by criminals in unscrupulous solicitations or wire transfer frauds, and collates a word (secondary content information) extracted from the main content by the extraction unit 22 with the list. For example, in a case where the word as the secondary content information approximates to a word spoken by criminals, the intervention control unit 20 determines to cause the intervention apparatus 10 to intervene in the main content. Further, the intervention control unit 20 holds feature information of a voice at the time of extortion, collates voice feature information indicated by the secondary content with the held feature information, and determines to cause the intervention apparatus 10 to intervene in the main content in a case where both pieces of feature information are similar. Further, the intervention control unit 20 holds keywords of trends. In a case where a word indicated by the secondary content information matches the keyword, the intervention control unit 20 determines to cause the intervention apparatus 10 to intervene in the main content. A method of using the secondary content in the intervention control unit 20 and a determination method are not limited.

### [Communication Method/Operation Example]

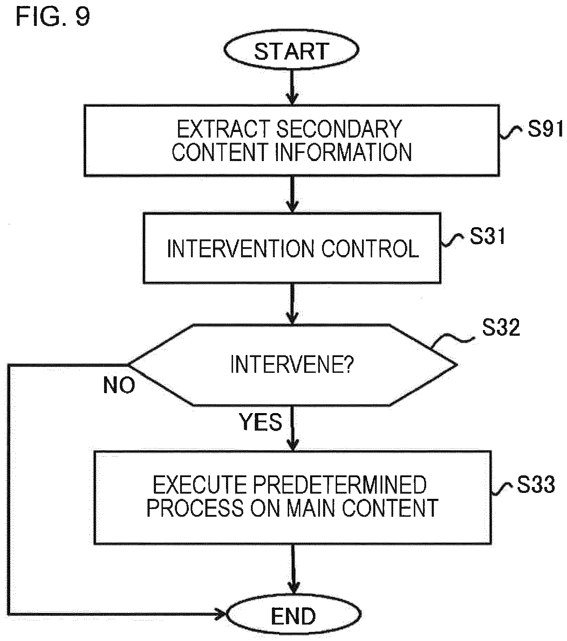

Hereinafter, a communication method in the third exemplary embodiment will be described with reference to FIG. 9. FIG. 9 is a flowchart illustrating an operation example of the communication system 1 according to the third exemplary embodiment. As illustrated in FIG. 9, the communication method in the third exemplary embodiment is executed by the communication system 1 in the third exemplary embodiment. Each step is executed by any one of the intervention apparatus 10, the other apparatus 11, and the user terminals 16 and 17 included in the communication system 1.

The communication method in the third exemplary embodiment further includes extracting the secondary content information from the main content (S91). In (S31), the intervention control is performed based on the secondary content information extracted in (S91). The specific contents of (S91) and (S31) are the same as the contents described above for the extraction unit 22 and the intervention control unit 20.

### [Advantageous Effect in Third Exemplary Embodiment]

As described above, in the third exemplary embodiment, whether or not to cause the intervention apparatus 10 to perform the predetermined process on the main content that is exchanged between the user terminal 16 and the user terminal 17 is controlled based on the secondary content information extracted from the main content. Since the secondary content information is extracted from the main content, it is possible to determine whether or not to cause the intervention apparatus 10 to intervene according to the exchanged main content. According to the third exemplary embodiment, whether or not to cause the intervention apparatus 10 to intervene can be automatically controlled in accordance with the exchanged main content without managing information for each endpoint, such as a whitelist or a blacklist.

### [Fourth Exemplary Embodiment]

### [Processing Configuration]

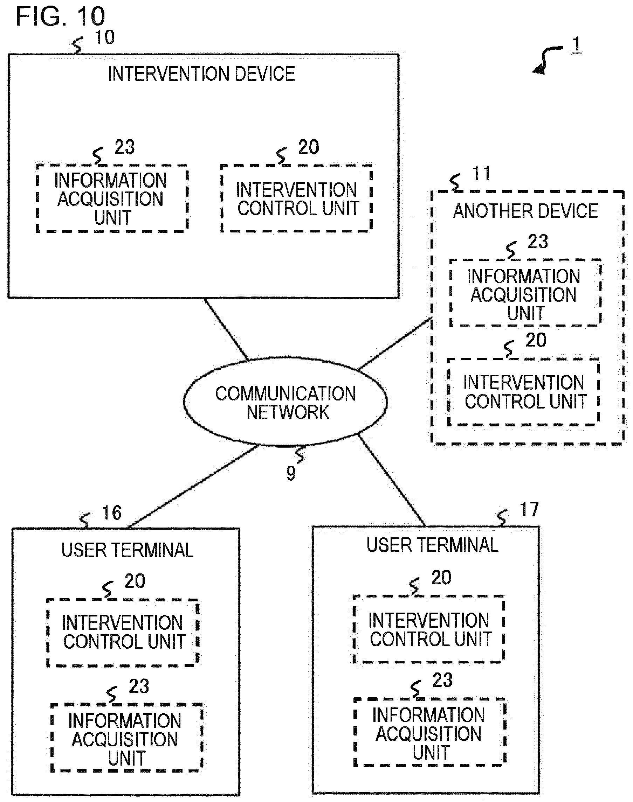

FIG. 10 is a diagram conceptually illustrating a processing configuration example of a communication system 1 according to a fourth exemplary embodiment. The communication system 1 further includes an information acquisition unit 23 in addition to the intervention control unit 20 provided in at least one (any one, any plurality, or all) of the intervention apparatus 10, the other apparatus 11, and the user terminals 16 and 17. The information acquisition unit 23 and the intervention control unit 20 may be included in different apparatuses. The information acquisition unit 23 is implemented similarly to the intervention control unit 20.

The information acquisition unit 23 acquires user information of at least one of the user terminal 16 and the user terminal 17. For example, the user information indicates at least one of, for example, attribute information of a user such as age, gender, family members, income level, or the user ID, identification information of the user such as the biological information (face, fingerprint, blood vessel, voiceprint, iris, or the like), situation information of the user such as geographical location, pulse, respiration, heart rate, or activity situation. The information acquisition unit 23 acquires such user information from at least one of the user terminal 16 and the user terminal 17. The information acquisition unit 23 can also acquire user information from another server apparatus. Specific content of the user information acquired by the information acquisition unit 23 is not limited as long as such information is user information.

The intervention control unit 20 determines whether or not to cause the intervention apparatus 10 to perform the predetermined process on the main content based on the user information acquired by the information acquisition unit 23. The intervention control unit 20 performs the above-described intervention control in accordance with this determination. Specifically, the intervention control unit 20 holds a whitelist of feature amounts of a facial image. In a case where a feature amount indicated by the acquired user information is not whitelisted, the intervention control unit 20 determines to cause the intervention apparatus 10 to intervene in the main content. Further, the intervention control unit 20 holds information on dangerous locations not to be entered by ordinary persons. In a case where position information indicated by the acquired user information indicates a dangerous location, the intervention control unit 20 determines to cause the intervention apparatus 10 intervene in the main content. Further, the intervention control unit 20 holds age information for each of a weekday and a holiday. In a case where the age information indicated by the acquired user information is not held, the intervention control unit 20 determines to cause the intervention apparatus 10 intervene in the main content. A method of using the user information in the intervention control unit 20 and a determination method are not limited.

### [Communication Method/Operation Example]

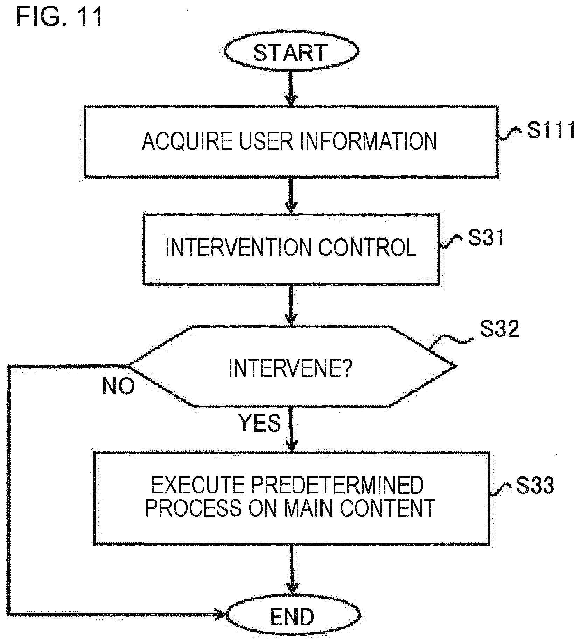

Hereinafter, a communication method in the fourth exemplary embodiment will be described with reference to FIG. 11. FIG. 11 is a flowchart illustrating an operation example of the communication system 1 in the fourth exemplary embodiment. As illustrated in FIG. 11, the communication method in the fourth exemplary embodiment is executed by the communication system 1 in the fourth exemplary embodiment. Each step is executed by any one of the intervention apparatus 10, the other apparatus 11, and the user terminals 16 and 17 included in the communication system 1.

The communication method in the fourth exemplary embodiment further includes acquiring user information of at least one of the user terminal 16 and the user terminal 17 (S111). In (S31), intervention control is performed based on the user information acquired in (S111). The specific contents of (S111) and (S31) are the same as the content described above for the information acquisition unit 23 and the intervention control unit 20.

### [Advantageous Effect in Fourth Exemplary Embodiment]

As described above, in the fourth exemplary embodiment, whether or not to cause the intervention apparatus 10 to perform the predetermined process on the main content that is exchanged between the user terminal 16 and the user terminal 17 is controlled based on the user information of at least one of the user terminals 16 and 17 as endpoints. Since the user information is information on a caller or a recipient of the main content to be exchanged, whether or not to cause the intervention apparatus 10 intervene can be determined in accordance with the information on the caller or recipient of the content. Further, since the caller or the recipient can be determined by the user information with high accuracy, it is possible to appropriately determine whether intervention of the intervention apparatus 10 is required.

### [Modification Example 1]

The intervention control unit 20 can cause the intervention apparatus 10 to switch a predetermined process to be executed on the main content when the intervention apparatus 10 performs the predetermined process, in addition to controlling whether or not to involve the intervention apparatus 10 to perform the predetermined process. For example, the intervention control unit 20 notifies the intervention apparatus 10 of information regarding a condition for switching a predetermined process to thereby cause the intervention apparatus 10 to switch the predetermined process. The intervention control unit 20 may hold identification information of contents of plural predetermined processes that are executable by the intervention apparatus 10. The intervention control unit 20 determines the contents of the predetermined process to be applied to the main content and notifies the intervention apparatus 10 of the identification information of the determined contents. The predetermined process itself to be switched or the switching condition is not limited. Thus, in response to any condition, intellectual capabilities added to communication can be distinguished and services to be provided can be distinguished.

For example, the intervention control unit 20 is capable of switching the degree of accuracy of the predetermined process based on a service level subscribed by each user of the user terminal 16 or the user terminal 17. Further, the predetermined process may be switched to a different predetermined process according to whether the user is whitelisted or blacklisted. For example, analysis for sharing interests or concerns between family members is performed on the main content exchanged between family members or friends, while analysis for detecting crimes such as a fraud is performed on the main content exchanged with an unknown person. For a switching condition of the predetermined process, for example, at least one of a notification from the user terminal 16 or 17, communication control information received by the reception unit 21, secondary content information extracted by the extraction unit 22, and user information acquired by the information acquisition unit 23 can be used.

### [Modification Example 2]

The communication system 1 may include plural intervention apparatuses 10 that execute different predetermined processes on the main content that is exchanged between the user terminal 16 and the user terminal 17. In this case, the intervention control unit 20 selects the intervention apparatus 10 that executes the predetermined process on the main content from among plural intervention apparatuses. For example, the intervention control unit 20 holds identification information of a content of the predetermined process for each intervention apparatus 10, determines the content of the predetermined process to be applied to the main content that is a target, and causes the intervention apparatus 10 corresponding to the content to execute the predetermined process. Accordingly, it is possible to distribute a load applied to the intervention apparatuses 10.

Hereinafter, further details of the above content will be described as examples. However, the above-described contents are not limited to only the contents of the following examples.

### [Example 1]

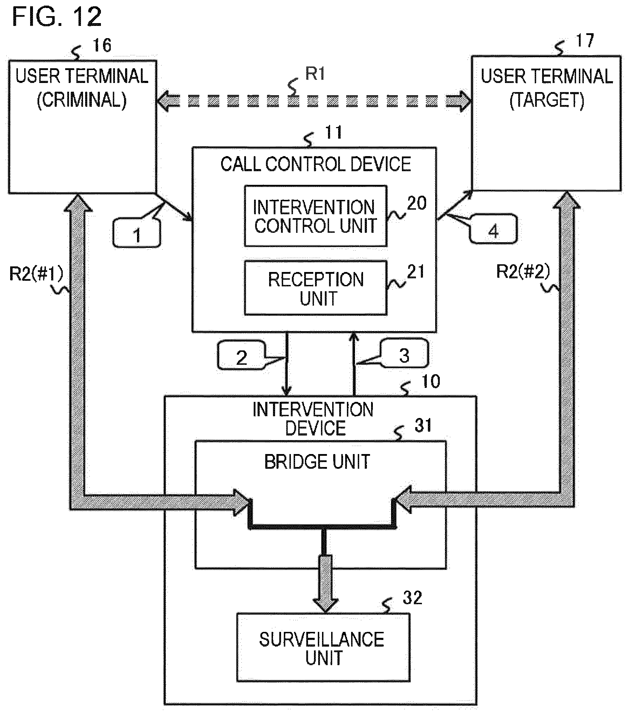

FIG. 12 is a diagram conceptually illustrating a communication system 1 according to Example 1. As illustrated in FIG. 12, the communication system 1 in Example 1 includes a call control apparatus 11 as the other apparatus 11, and the call control apparatus 11 includes an intervention control unit 20 and a reception unit 21. The call control apparatus 11 controls a telephone call between the user terminals. For example, the call control apparatus 11 is implemented as an IP multimedia subsystem (IMS), and performs session control (serving call session control function (S-CSCF), a proxy CSCF (P-CSCF), or the like) based on session initiation protocol (SIP).

Although one call control apparatus 11 is illustrated for clarity in FIG. 12, there may be plural call control apparatuses 11. Further, in Example 1, the communication format between the call control apparatus 11, and the user terminal 16 and the user terminal 17 or a call control protocol is not limited. That is, a call between the user terminal 16 and the user terminal 17 is implemented by a voice line such as a mobile communication line or a fixed telephone line, or data communication. The communication system 1 provides a call service with intellectual capabilities by the configuration illustrated in FIG. 12.

The intervention apparatus 10 includes, for example, a bridge unit 31 and a surveillance unit 32. The bridge unit 31 and the surveillance unit 32 may be implemented as hardware components or software components, or may be implemented by a combination of hardware and software components. The bridge unit 31 relays a voice as a main content between a communication path R2(#1) between the user terminal 16 and the intervention apparatus 10 and a communication path R2 (#2) between the user terminal 17 and the intervention apparatus 10. Specifically, the bridge unit 31 transmits a user voice of the user terminal 16 that is incoming via the communication path R2(#1) corresponding to a first telephone number of the intervention apparatus 10 to the communication path R2(#2) corresponding to the second telephone number of the intervention apparatus 10. Conversely, the bridge unit 31 transmits a user voice of the user terminal 17 that is incoming via the communication path R2(#2) corresponding to the second telephone number of the intervention apparatus 10 to the communication path R2(#1) corresponding to the first telephone number of the intervention apparatus 10.

The surveillance unit 32 sequentially acquires copies of the voice as the main content from the bridge unit 31 and performs a predetermined process on the copies of the voice. For example, the surveillance unit 32 performs voice recognition or voice analysis on the copies of the voice. Based on the volume, tone, words of the voice, or the like extracted by such a process, the surveillance unit 32 is capable of detecting that the voice that is exchanged as the main content is not a normal conversation (abnormal conversation). The surveillance unit 32 may notify the user terminal 17 of the detection result or may notify the police, security personnel, or the like of the detection result. However, the operation of the content and the processing result of the predetermined process that is executed by the surveillance unit 32 are not limited.

Next, a specific intervention control method in Example 1 will be described. The reception unit 21 acquires communication control information from a call connection request made to the user terminal 17 transmitted from the user terminal 16 (balloon 1 in FIG. 12). When the communication control information is acquired, the intervention control unit 20 controls whether or not to cause the intervention apparatus 10 to intervene in the voice call between the user terminal 16 and the user terminal 17 based on the communication control information (for example, a telephone number), as follows.

The intervention control unit 20 holds a whitelist of telephone numbers. In a case where the telephone number of the request source is whitelisted, the intervention control unit 20 causes the call control apparatus 11 to perform control to enable the call between the user terminal 16 and the user terminal 17 in the communication path R1, as usual. On the other hand, in a case where the telephone number of the request source is not whitelisted, the intervention control unit 20 performs control to enable the call to be made in the communication path R2. Specifically, the intervention control unit 20 establishes a communication path R2 (#1) between the user terminal 16 and the intervention apparatus 10 in accordance with the connection request from the user terminal 16, and establishes a communication path R2(#2) between the intervention apparatus 10 and the user terminal 17.

For the establishment of the communication path R2(#1), an existing call transfer method may be used. The intervention control unit 20 transfers a connection request from the user terminal 16 to a first telephone number of the intervention apparatus 10 (balloon 2 of FIG. 12) and establishes the communication path R2(#1). At this time, the intervention control unit 20 may notify the intervention apparatus 10 of the first telephone number or the identification information of the request destination included in the connection request. The intervention apparatus 10 identifies a second telephone number of the request destination based on the information notified from the intervention control unit 20, and transmits a call connection request in which the second telephone number is specified (balloon 3 of FIG. 12). When the intervention control unit 20 receives a call connection request (balloon 3 in FIG. 12), the intervention control unit 20 transfers the call connection request to the user terminal 17 (balloon 4 in FIG. 12) to establish the communication path R2(#2). The intervention control unit 20 may perform control so that the communication path R2(#2) between the user terminal 17 and the intervention apparatus 10 is established without causing the intervention apparatus 10 to transmit a request for connection to the user terminal 17. For establishment of the communication paths R2(#1) and (#2), for example, SIP is used.

In Example 1, it is determined whether or not to cause the intervention apparatus 10 to intervene in a call between the user terminal 16 and the user terminal 17 based on the communication control information (identification information of the call request source) obtained from the call connection request. In a case where the intervention apparatus 10 intervenes, the user terminal 16 and the intervention apparatus 10 are call-connected and the intervention apparatus 10 and the user terminal 17 are call-connected, in accordance with a connection request from the user terminal 16 to the user terminal 17. In the intervention apparatus 10, the voice transferred on each communication path is relayed to another communication path while a predetermined process is performed on copies of the voice by the surveillance unit 32.

Thus, in accordance with Example 1, a function of the communication network (including the intervention apparatus 10 and the call control apparatus 11) between the user terminal 16 and the user terminal 17 as endpoints surveils the exchanged main content and switches between surveillance and non-surveillance states. That is, in accordance with Example 1, it is possible to realize intellectualization of the communication network. Accordingly, the user of the user terminal 17 is able to avoid frauds, extortion, or the like by the surveillance unit 32 surveilling voice calls. Further, since the contents of the user's call with an acquaintance are not surveilled, invasion of privacy can be avoided. That is, according to Example 1, it is possible to provide a safe, secure, and comfortable communication service to the user.

In the example of FIG. 12, whether or not to cause the intervention apparatus 10 to intervene in the call was determined through identification of a call request source. However, whether or not to cause the intervention apparatus 10 to intervene in the call may be determined through identification of a call request destination. In this case, the intervention control unit 20 may control whether or not to cause the intervention apparatus 10 to intervene in a voice call between the user terminal 16 and the user terminal 17 based on identification information (telephone number) of a call connection request destination. Thus, even when a user receives an incoming call from a telephone number of an unknown caller, the user can receive the call with a sense of security.

### [Example 2]

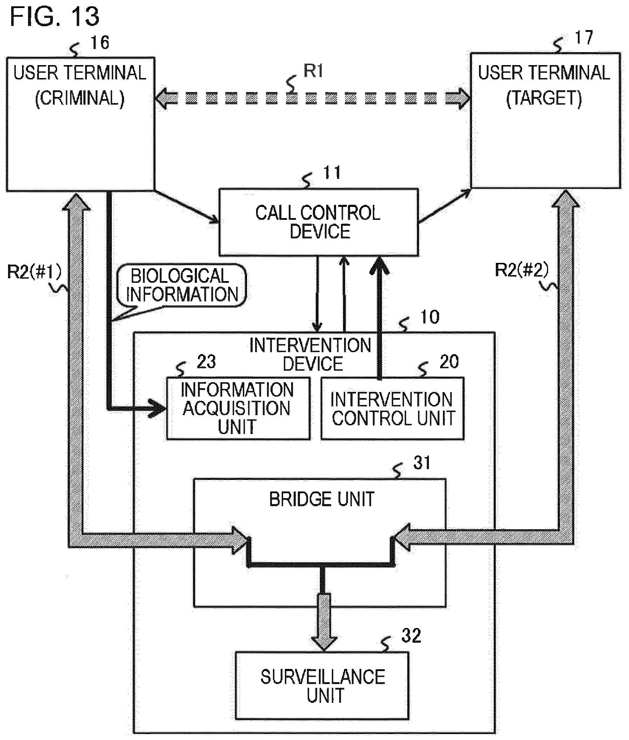

FIG. 13 is a diagram conceptually illustrating a communication system 1 according to Example 2. As illustrated in FIG. 13, the communication system 1 in Example 2 includes a call control apparatus 11 as the other apparatus 11. The call control apparatus 11 in Example 2 performs general call control. The intervention apparatus 10 further includes an intervention control unit 20 and an information acquisition unit 23, in addition to the bridge unit 31 and the surveillance unit 32. Hereinafter, the same content as in Example 1 will not be repeated.

Next, a specific intervention control method according to Example 2 will be described. When a call connection request from the user terminal 16 to the user terminal 17 (balloon 1 in FIG. 13) is received by the call control apparatus 11, the intervention control unit 20 causes the user terminal 16 to transmit the user information (biological information or the like). Accordingly, the information acquisition unit 23 can acquire the user information such as a facial image from the user terminal 16. For example, the intervention control unit 20 receives a notification from the call control apparatus 11 indicating that the call connection request has been received, and instructs the user terminal 16 that is a request source to provide biological information in response to the notification. Further, the intervention control unit 20 may instruct the user terminal 16 to provide biological information upon receiving a transfer of the call connection request from the call control apparatus 11in response to the transfer. Further, the user terminal 16 may transmit the biological information together with the call connection request to the call control apparatus 11, and the information acquisition unit 23 may acquire the biological information from the call control apparatus 11.

The intervention control unit 20 holds a whitelist of biological information, and collates the biological information of a request source acquired by the information acquisition unit 23 with the whitelist. In a case where the biological information is similar to any piece of biological information in the whitelist, the intervention control unit 20 causes the call control apparatus 11 to perform control so that the call between the user terminal 16 and the user terminal 17 is performed in the communication path R1, as usual. In this case, the intervention control unit 20 notifies the call control apparatus 11 of a successful collation. Further, in a case where the intervention control unit 20 has received a transfer of the call connection request, the intervention control unit 20 causes the call control apparatus 11 to transfer the call connection request to the user terminal 17.

On the other hand, in a case where biological information similar to the biological information of the request source is not whitelisted, the intervention control unit 20 performs control so that the call is performed on the communication path R2. Specifically, the intervention control unit 20 notifies the call control apparatus 11 of a failed collation, to receive a transfer of the call connection request from the user terminal 16, establish the communication path R2(#1) between the user terminal 16 and the intervention apparatus 10, and establish the communication path R2 (#2) between the intervention apparatus 10 and the user terminal 17. A method of establishing the communication path R2(#1) and (#2) is the same as in Example 1.

In Example 2, it is determined whether or not to cause the intervention apparatus 10 to intervene in the call between the user terminal 16 and the user terminal 17, based on the user information (for example, biological information) transmitted from the call request source. In a case where determination is made to cause the intervention apparatus 10 to intervene in the call, the user terminal 16 and the intervention apparatus 10 are call-connected and the intervention apparatus 10 and the user terminal 17 are call-connected, similar to Example 1. In the intervention apparatus 10, the voice transferred on each communication path is relayed to another communication path while copies of the voice are subjected to a predetermined process by the surveillance unit 32.

According to Example 2, it is possible to obtain the same effects as in Example 1. Further, according to Example 2, since the user information (biological information) of the call request source is used, it is possible to authenticate the call request source with high accuracy and to prevent spoofing.

In the example of FIG. 13, whether or not to cause the intervention apparatus 10 to intervene in the call was determined through biological information of a call request source. However, whether or not to cause the intervention apparatus 10 to intervene in the call may also be determined through biological information of a call request destination. In this case, the information acquisition unit 23 acquires the biological information of the user from the user terminal 17 that is a call request destination. The intervention control unit 20 may control whether or not to cause the intervention apparatus 10 to intervene in a voice call between the user terminal 16 and the user terminal 17 based on the biological information of a call connection request destination. Thus, even when a user receives an incoming call from a telephone number of an unknown caller, the user can receive the call with a sense of security.

### [Example 3]

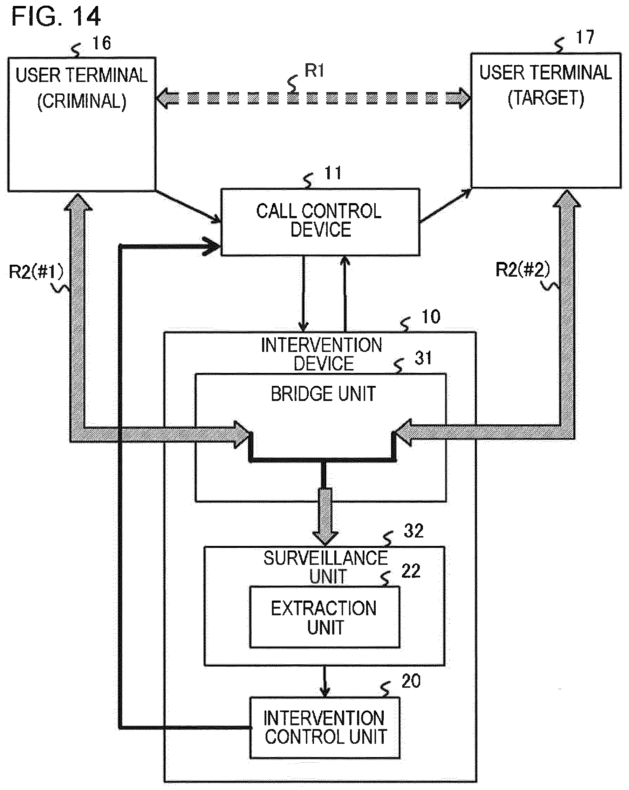

FIG. 14 is a diagram conceptually illustrating a communication system 1 in Example 3. As illustrated in FIG. 14, the communication system 1 in Example 3 includes a call control apparatus 11 as the other apparatus 11. The call control apparatus 11 in Example 3 performs general call control. An intervention apparatus 10 further includes an intervention control unit 20 and an extraction unit 22, in addition to the bridge unit 31 and the surveillance unit 32. In Example 3, the surveillance unit 32 and the extraction unit 22 does not need to be distinguishable from each other. The communication system 1 in Example 3 provides a call service with intellectual capabilities using a configuration illustrated in FIG. 14, similar to Example 1 and Example 2. Hereinafter, the same content as that in Examples 1 and 2 will not be repeated.

A specific intervention control method in Example 3 will be described below. In Example 3, when a call connection request from the user terminal 16 to the user terminal 17 (balloon 1 in FIG. 13) is received by the call control apparatus 11, the call is first started in a communication path R2. A method of establishing the communication path R2 is the same as in Example 1. The extraction unit 22 (or the surveillance unit 32) extracts the secondary content information from a copy of the voice of the call while the call is being made in the communication path R2. For example, the extraction unit 22 applies a voice recognition process to the copy of the voice to extract word information as secondary content information from the call.

The intervention control unit 20 holds a list of dangerous words. In a case where a period of time during which the list of dangerous words does not include the word information extracted by the extraction unit 22 exceeds a predetermined time period, the intervention control unit 20 causes the call control apparatus 11 to perform control so that a call between the user terminal 16 and the user terminal 17 is made in the communication path R1, as usual. In this case, the intervention control unit 20 instructs the call control apparatus 11 to switch the communication path for the call between the user terminal 16 and the user terminal 17. When the call control apparatus 11 receives the instruction, the call control apparatus 11 establishes the communication path R1 and disconnects the communication paths R2(#1) and R2(#2). For the establishment of the communication path R1 and the disconnection of the communication paths R2(#1) and R2(#2), an existing call control message may be used. From here, the call between the user terminal 16 and the user terminal 17 is made in the communication path R1.

On the other hand, in a case where word information included in the list of dangerous words is extracted by the extraction unit 22, the intervention control unit 20 causes a state of intervention of the intervention apparatus 10 in the call to continue. That is, the surveillance unit 32 continues surveillance of the call.

In Example 3, the call between the user terminal 16 and the user terminal 17 is started in a state intervened by the intervention apparatus 10. Whether the intervened state is to be continued or not is controlled based on the secondary content information extracted from the voice of the call. In a case where the call is determined to be safe based on the secondary content information, the call transitions to a call state in the communication path R1, that is, a state not intervened by the intervention apparatus 10.

According to Example 3, it is possible to obtain the same effects as in Example 1. Further, according to Example 3, since the intervened state by the intervention apparatus 10 is controlled based on the information obtained from an actual call voice, the safety of the call is further improved. Further, since it is not necessary to manage endpoint or user information, it is possible to improve user convenience.

### [Example 4]

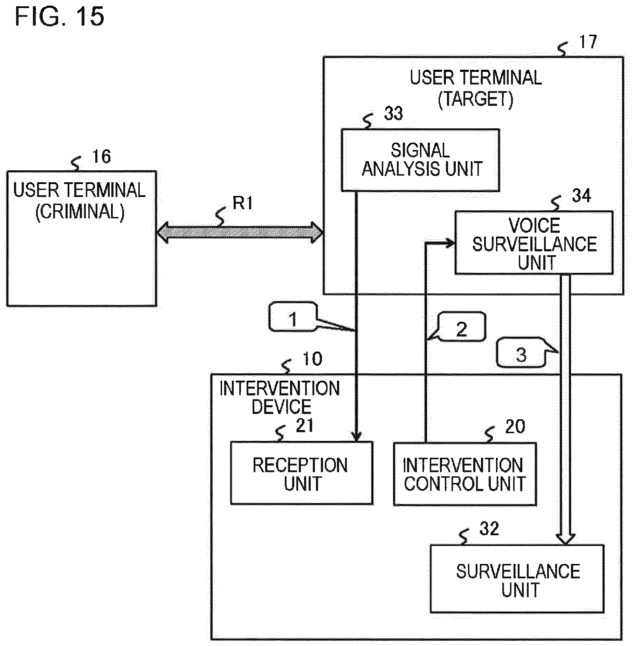

FIG. 15 is a diagram conceptually illustrating a communication system 1 in Example 4. In Example 4, as illustrated in FIG. 15, an intervention apparatus 10 includes an intervention control unit 20, a reception unit 21, and a surveillance unit 32, and a user terminal 17 includes a signal analysis unit 33 and a voice surveillance unit 34. The communication system 1 in Example 4 provides a call service with intellectual capabilities using the configuration illustrated in FIG. 15, similar to the above-described examples. Hereinafter, the same content as that in each of the above-described examples will not be repeated.

The signal analysis unit 33 analyzes a control signal (for example, Non-Access Stratum (NAS)) that is exchanged between a core network (for example, the call control apparatus 11) and the user terminal 17 for implementing a call between the user terminal 16 and the user terminal 17. For example, the signal analysis unit 33 analyzes the control signal to acquire identification information (for example, a telephone number) of the user terminal 16 that is the opposite communication party.

The voice surveillance unit 34 extracts voice data from the call between the user terminal 16 and the user terminal 17 in accordance with an instruction from the intervention control unit 20 of the intervention apparatus 10, and transmits the extracted voice data to the intervention apparatus 10. For example, in a case where the call is made using a voice line such as a mobile communication line or a fixed telephone line, the voice surveillance unit 34 converts a voice signal of the voice line into digital voice data, and transmits the digital voice data to the intervention apparatus 10. For the conversion, a well-known voice encoding technology and a well-known audio decoding technology may be used. Further, in a case where the voice surveillance unit 34 receives a voice of the call as an IP packet using Real-Time Transport Protocol (RTP) or the like, the voice surveillance unit 34 may transmit the IP packet to the intervention apparatus 10 as it is, as voice data, without decoding the payload of the RTP packet. Further, the voice surveillance unit 34 may extract any one of a user speech of the user terminal 16 and a user speech of the user terminal 17 and transmit voice data of the extracted user speech to the intervention apparatus 10. If there is no instruction from the intervention control unit 20, the voice surveillance unit 34 does not need to operate.

The signal analysis unit 33 and the voice surveillance unit 34 are implemented by installing an application software program provided from a specific server apparatus (for example, the intervention apparatus 10) in the user terminal 17 and executing the program in the CPU of the user terminal 17. Such a program may be pre-installed in the user terminal 17.

The user terminal 17 and the intervention apparatus 10 are data-communicably connected to each other. The user terminal 17 and the intervention apparatus 10 may be fixedly connected to a Virtual Private Network (VPN). The form of communication between the user terminal 17 and the intervention apparatus 10 is not limited as long as the voice data extracted by the voice surveillance unit 34 and the control signal acquired by the signal analysis unit 33 can be transferred.

The reception unit 21 receives control information from the signal analysis unit 33.

The intervention control unit 20 determines whether or not to cause the intervention apparatus 10 to transfer the voice data of the call to the user terminal 17 based on the control information received by the reception unit 21. A method for this determination is the same as in Example 1. In a case where the intervention control unit 20 determines to transfer the voice data, the intervention control unit 20 instructs the voice surveillance unit 34 to transfer the data.

Hereinbelow, a specific intervention control method in Example 4 will be described. In Example 4, a call between the user terminal 16 and the user terminal 17 is started using a well-known method. As described above, the call between the user terminal 16 and the user terminal 17 is implemented by a voice line or data communication. During a sequence of a call connection, the signal analysis unit 33 acquires control information and transmits the control information to the intervention apparatus 10 (balloon 1 in FIG. 15). In the intervention apparatus 10, the intervention control unit 20 determines whether or not to transfer data based on the control information. When a determination is made to perform a transfer, the intervention control unit 20 instructs the user terminal 17 to perform the transfer (balloon 2 in FIG. 15). The voice surveillance unit 34 of the user terminal 17 receives the instruction, extracts the voice data from the call that is exchanged between the user terminal 16 and the user terminal 17 as needed, and transfers the voice data to the intervention apparatus 10 as needed (balloon 3 in FIG. 15). Accordingly, the surveillance unit 32 of the intervention apparatus 10 performs analysis of the voice data. On the other hand, when the transfer is determined to be unnecessary, the voice data of the call is not transferred.

In Example 4, when the call between the user terminal 16 and the user terminal 17 is started, whether or not a transfer of the voice data of the call is required is determined based on the control information for the call. Based on the result of the determination, the voice data extracted from the call between the user terminal 16 and the user terminal 17 is transferred as needed from the user terminal 17 to the intervention apparatus 10 and analyzed as needed in the intervention apparatus 10. Accordingly, in Example 4, it is possible to obtain the same effects as in Example 1. Further, in Example 4, since the intervening state of the intervention apparatus 10 is controlled without dependency on the communication path and the communication protocol for the call between the user terminal 16 and the user terminal 17, it is possible to reduce implementation costs without affecting the existing system.

Although the intervention apparatus 10 includes the reception unit 21 and the intervention control unit 20 in the example of FIG. 15, the user terminal 17 may include the reception unit 21 and the intervention control unit 20. In this case, the user terminal 17 itself may determine the necessity of the transfer. Further, only the user terminal 16 may include the signal analysis unit 33 and the voice surveillance unit 34.

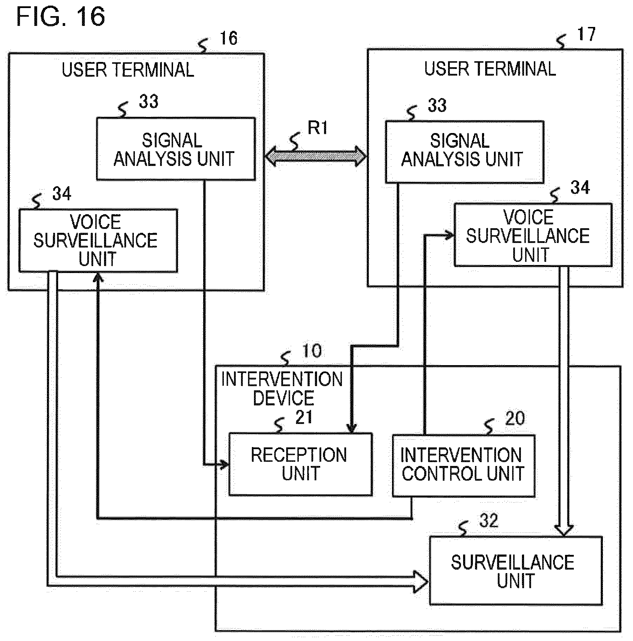

FIG. 16 is a diagram conceptually illustrating a communication system 1 in a modification example of Example 4. As illustrated in FIG. 16, both a user terminal 16 and a user terminal 17 may include a signal analysis unit 33 and a voice surveillance unit 34. In this case, the signal analysis unit 33 of each of the user terminals 16 and 17 acquires control information indicating identification information of the opposite party and transmits the control information to the intervention apparatus 10. The voice surveillance unit 34 of each of the user terminals 16 and 17 each acquires voice data of the user of the own terminal or voice data of the user of the opposite party's terminal, and transmits the extracted voice data to the intervention apparatus 10. In a case where the voice surveillance unit 34 acquires the voice data of the user of the own terminal, the voice surveillance unit 34 may extract voice data from a voice signal obtained from a voice collector of the own terminal, apart from a voice signal from the call. The intervention control unit 20 determines the necessity of the intervention by the intervention apparatus 10 based on the control information acquired by the reception unit 21, and issues an instruction to the voice surveillance unit 34 of each of the user terminals 16 and 17.

### [Example 5]

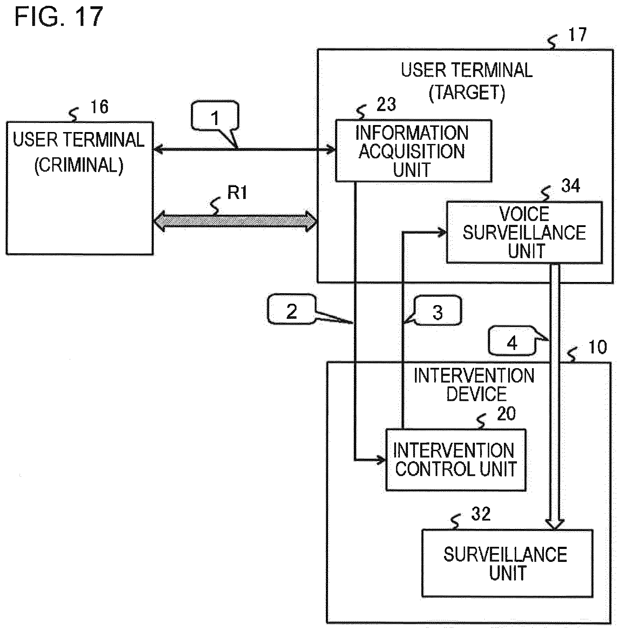

FIG. 17 is a diagram conceptually illustrating a communication system 1 in Example 5. In Example 5, as illustrated in FIG. 17, an intervention apparatus 10 includes an intervention control unit 20 and a surveillance unit 32, and a user terminal 17 includes an information acquisition unit 23 and a voice surveillance unit 34. Hereinafter, the same content as that in each of the above-described examples will not be repeated.

Hereinbelow, a specific intervention control method in Example 5 will be described. In Example 5, a call between the user terminal 16 and the user terminal 17 is started using a well-known method. After completion of the call connection or during a sequence of the call connection, the information acquisition unit 23 acquires the user information (biological information) from the user terminal 16 (balloon 1 in FIG. 17). The information acquisition unit 23 may instruct the user terminal 16 of the opposite party to provide the user information. Further, the user terminal 16 may spontaneously transmit the user information. The information acquisition unit 23 transmits the acquired user information to the intervention apparatus 10 (balloon 2 of FIG. 17).

The intervention control unit 20 determines the necessity of the transfer using the same method as in Example 2 based on the received user information. When determination is made to perform the transfer, the intervention control unit 20 instructs the user terminal 17 to perform the transfer (balloon 3 in FIG. 17). The voice surveillance unit 34 of the user terminal 17 receives the instruction, extracts the voice data from the call that is exchanged between the user terminal 16 and the user terminal 17 as necessary, and transfers the voice data to the intervention apparatus 10 as necessary (balloon 4 in FIG. 17). Accordingly, the surveillance unit 32 of the intervention apparatus 10 performs analysis of the voice data. On the other hand, when the transfer is determined not necessary, the voice data of the call is not transferred.

In Example 5, during an attempt at call connection between the user terminal 16 and the user terminal 17, the user information of the call request source (user terminal 16) is acquired by the user terminal 17, and the user information is sent to the intervention apparatus 10. In the intervention apparatus 10, whether or not a transfer of the voice data of the call is necessary is determined based on the user information. Based on a result of the determination, the voice data extracted from the call between the user terminal 16 and the user terminal 17 is transferred from the user terminal 17 to the intervention apparatus 10 as necessary, and is analyzed as necessary in the intervention apparatus 10. Therefore, in Example 5, the same effects as in Example 4 can be obtained, and the intervening state of the intervention apparatus 10 may be controlled with high accuracy based on the user information.

Although only the user terminal 17 includes the information acquisition unit 23 and the voice surveillance unit 34 in the example of FIG. 17, both of the user terminal 16 and the user terminal 17 may include the information acquisition unit 23 and the voice surveillance unit 34, as illustrated in FIG. 16. Further, only the user terminal 17 may include the information acquisition unit 23 and the voice surveillance unit 34.

### [Example 6]

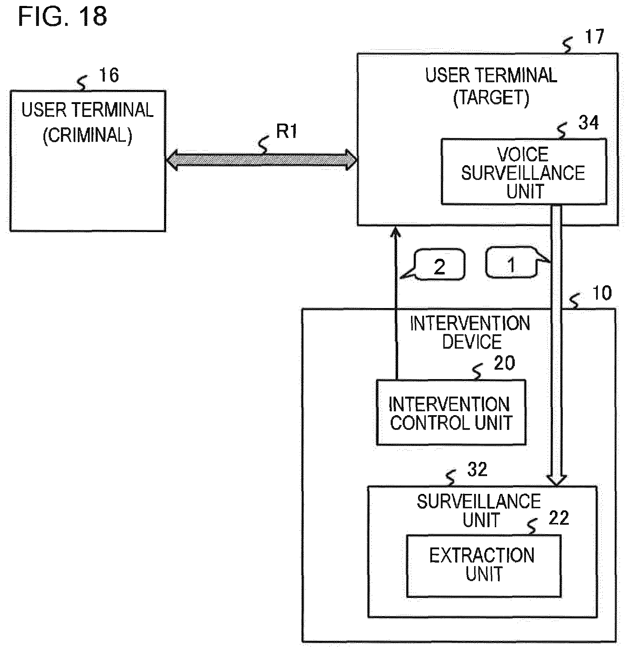

FIG. 18 is a diagram conceptually illustrating a communication system 1 in Example 6. In Example 6, as illustrated in FIG. 18, an intervention apparatus 10 includes an intervention control unit 20, a surveillance unit 32, and an extraction unit 22, and a user terminal 17 includes a voice surveillance unit 34. In Example 6, the surveillance unit 32 and the extraction unit 22 does not need to be distinguishable from each other. Hereinafter, the same content as that in each of the above-described examples will not be repeated.

A specific intervention control method in Example 6 will be described below. In Example 6, a call between the user terminal 16 and the user terminal 17 is started using a well-known method. When the call is started, the voice surveillance unit 34 extracts the voice data from the call as necessary, and transfers the voice data to the intervention apparatus 10 as necessary (balloon 1 in FIG. 18). The extraction unit 22 extracts the secondary content information (for example, word information) from the voice data. At this time, the surveillance unit 32 may or may not perform the predetermined process on the voice data.

The intervention control unit 20 determines the necessity of a transfer based on the secondary content information using same method as in Example 3. When the intervention control unit 20 determines that the transfer is not necessary, the intervention control unit 20 notifies the user terminal 17 that the transfer is not necessary (balloon 2 of FIG. 18). In a case where the user terminal 17 receives the notification indicating that the transfer is not necessary from the intervention apparatus 10, the user terminal 17 stops the process of the voice surveillance unit 34. Note that, in a case where the intervention control unit 20 determines that the transfer is necessary, no further operation is needed to be performed by the intervention control unit 20. Accordingly, the process of the voice surveillance unit 34 is continued. In a case where the surveillance unit 32 is not operated when the intervention control unit 20 determines that the transfer is necessary, the intervention control unit 20 may cause the surveillance unit 32 to start a predetermined process.

In Example 6, when a call is started between the user terminal 16 and the user terminal 17, the voice data of the call is transferred from the user terminal 17 to the intervention apparatus 10 as necessary. In the intervention apparatus 10, the secondary content information is extracted from the voice data, and the transfer of the voice data is continued or stopped based on the secondary content information. Therefore, according to Example 6, since an intervening state by the intervention apparatus 10 is controlled based on the information obtained from an actual call voice, safety of the call may be further improved. Further, since it is not necessary to manage the information of endpoints or users, it is possible to improve user convenience.

Although only the user terminal 17 includes the voice surveillance unit 34 in the example of FIG. 18, both of the user terminal 16 and the user terminal 17 may include the voice surveillance unit 34, as illustrated in FIG. 16. Further, only the user terminal 17 may include the voice surveillance unit 34. Further, the user terminal 16 or 17 may include the extraction unit 22. In this case, the intervention control unit 20 of the intervention apparatus 10 may acquire the secondary content information from the user terminal 16 or 17.

Although the call service with intellectual capabilities has been exemplified in each of the above examples, the above-described content can be applied to not only call services but also to data communication services.

Further, although plural steps (processes) have been described in order in the plural flowcharts used in the above description, the order of the illustrated steps can be changed in a range as long as there is no interference with the contents. Further, the exemplary embodiments and the modifications described above can be combined in a range as long as there is no inconsistency in the contents.

Some or all of the above contents can be also specified as follows. However, the above-described contents are not limited to the description below.
1. A communication system, including:
   an intervention apparatus that performs a predetermined process on a main content that is exchanged between endpoint apparatuses; and
   an intervention control unit that controls whether or not to cause the intervention apparatus to perform the predetermined process on the main content that is exchanged between a first endpoint apparatus and a second endpoint apparatus.
2. The communication system according to 1,
   wherein the intervention control unit changes a transfer path of the main content to control whether or not to cause the intervention apparatus to perform the predetermined process on the main content that is exchanged between the first endpoint apparatus and the second endpoint apparatus.
3. The communication system according to 2,
   wherein the intervention control unit determines a communication path in which the main content is exchanged between the first endpoint apparatus and the second endpoint apparatus to be any one of a communication path intervened by the intervention apparatus and a communication path not intervened by the intervention apparatus, for the control.
4. The communication system according to 2,
   wherein the intervention control unit determines whether or not to cause one or both of the first endpoint apparatus and the second endpoint apparatus to transfer the main content to the intervention apparatus, for the control.
5. The communication system according to 1,
   wherein the intervention control unit selects any one of an exchange of the main content in a superimposed manner in a first communication path intervened by the intervention apparatus connecting the first endpoint apparatus and the second endpoint apparatus and a second communication path connecting the first endpoint apparatus and the second endpoint apparatus not intervened by the intervention apparatus and an exchange of the main content only in the second communication path, to control whether or not to cause the intervention apparatus to perform the predetermined process on the main content exchanged between the first endpoint apparatus and the second endpoint apparatus.
6. The communication system according to any one of 1 to 5, further including:
   a reception unit that receives communication control information for establishing a communication path on which the main content is exchanged between the first endpoint apparatus and the second endpoint apparatus,
   wherein the intervention control unit determines whether or not to cause the intervention apparatus to perform the predetermined process on the main content based on the received communication control information.
7. The communication system according to any one of 1 to 6, further including:
   an extraction unit that extracts secondary content information from the main content,
   wherein the intervention control unit determines whether or not to cause the intervention apparatus to perform the predetermined process on the main content based on the extracted secondary content information.
8. The communication system according to any one of 1 to 7, further including:
   an information acquisition unit that acquires user information of at least one of the first endpoint apparatus and the second endpoint apparatus,
   wherein the intervention control unit determines whether or not to cause the intervention apparatus to perform the predetermined process on the main content based on the acquired user information.
9. The communication system according to any one of 1 to 8,
   wherein the intervention control unit causes the intervention apparatus to switch the predetermined process that is executed on the main content.
10. The communication system according to any one of 1 to 9, including:
   a plurality of intervention apparatuses each executing different predetermined processes on the main content that is exchanged between endpoint apparatuses,
   wherein the intervention control unit selects an intervention apparatus that executes a predetermined process for the main content.
11. A communication method that is executed by a communication system including an intervention apparatus that performs a predetermined process on a main content that is exchanged between endpoint apparatuses, the method including:
   controlling whether or not to cause the intervention apparatus to perform the predetermined process on the main content that is exchanged between a first endpoint apparatus and a second endpoint apparatus.
12. The communication method described in 11,
   wherein the control of whether or not to cause the intervention apparatus to perform the predetermined process on the main content includes changing a communication path of the main content.
13. The communication method according to 12,
   wherein a communication path in which the main content is exchanged between the first endpoint apparatus and the second endpoint apparatus is determined to be any one of a communication path intervened by the intervention apparatus and a communication path not intervened by the intervention apparatus.
14. The communication method according to 12, further including:
   determining whether or not to cause one or both of the first endpoint apparatus and the second endpoint apparatus to transfer the main content to the intervention apparatus.
15. The communication method according to 11,
   wherein the control of whether or not to cause the intervention apparatus to perform the predetermined process on the main content includes selecting any one of an exchange of the main content in a superimposed manner in a first communication path intervened by the intervention apparatus connecting the first endpoint apparatus and the second endpoint apparatus and a second communication path connecting the first endpoint apparatus and the second endpoint apparatus not intervened by the intervention apparatus, and an exchange of the main content in only the second communication path.
16. The communication method according to any one of 11 to 15, further including:
   receiving communication control information for establishing a communication path on which the main content is exchanged between the first endpoint apparatus and the second endpoint apparatus, and
   determining whether or not to cause the intervention apparatus to perform the predetermined process on the main content based on the received communication control information.
17. The communication method according to any one of 11 to 16, further including:
   extracting secondary content information from the main content, and
   determining whether or not to cause the intervention apparatus to perform the predetermined process on the main content based on the extracted secondary content information.
18. The communication method according to any one of 11 to 17, further including:
   acquiring user information of at least one of the first endpoint apparatus and the second endpoint apparatus, and
   determining whether or not to cause the intervention apparatus to perform the predetermined process on the main content based on the acquired user information.
19. The communication method according to any one of 11 to 18, further including causing the intervention apparatus to switch the predetermined process that is executed for the main content.
20. The communication method according to any one of 11 to 19,
   wherein the communication system includes a plurality of intervention apparatuses that execute different predetermined processes for the main content that is exchanged between endpoint apparatus, and
   the communication method further includes selecting an intervention apparatus that executes a predetermined process for the main content.
21. A program that causes at least one apparatus included in the communication system to execute the communication method described in any one of 11 to 19.

Priority is claimed on Japanese Patent Application No. 2015-028333, filed February 17, 2015, the content of which is incorporated herein by reference.

## Claims

1. A communication system, comprising:
an intervention apparatus that performs a predetermined process on a main content that is exchanged between endpoint apparatuses; and
an intervention control unit that controls whether or not to cause the intervention apparatus to perform the predetermined process on the main content that is exchanged between a first endpoint apparatus and a second endpoint apparatus.

2. The communication system according to claim 1,
wherein the intervention control unit changes a transfer path of the main content to control whether or not to cause the intervention apparatus to perform the predetermined process on the main content that is exchanged between the first endpoint apparatus and the second endpoint apparatus.

3. The communication system according to claim 2,
wherein the intervention control unit determines a communication path in which the main content is exchanged between the first endpoint apparatus and the second endpoint apparatus to be any one of a communication path intervened by the intervention apparatus and a communication path not intervened by the intervention apparatus, for the control.

4. The communication system according to claim 2,
wherein the intervention control unit determines whether or not to cause one or both of the first endpoint apparatus and the second endpoint apparatus to transfer the main content to the intervention apparatus, for the control.

5. The communication system according to claim 1,
wherein the intervention control unit selects any one of an exchange of the main content in a superimposed manner in a first communication path intervened by the intervention apparatus connecting the first endpoint apparatus to the second endpoint apparatus and a second communication path connecting the first endpoint apparatus to the second endpoint apparatus not intervened by the intervention apparatus and an exchange of the main content only in the second communication path, to control whether or not the intervention apparatus is caused to perform the predetermined process on the main content exchanged between the first endpoint apparatus and the second endpoint apparatus.

6. The communication system according to any one of claims 1 to 5, further comprising:
a reception unit that receives communication control information for establishing a communication path on which the main content is exchanged between the first endpoint apparatus and the second endpoint apparatus,
wherein the intervention control unit determines whether or not to cause the intervention apparatus to perform the predetermined process on the main content based on the received communication control information.

7. The communication system according to any one of claims 1 to 6, further comprising:
an extraction unit that extracts secondary content information from the main content,
wherein the intervention control unit determines whether or not to cause the intervention apparatus to perform the predetermined process on the main content based on the extracted secondary content information.

8. The communication system according to any one of claims 1 to 7, further comprising:
an information acquisition unit that acquires user information of at least one of the first endpoint apparatus and the second endpoint apparatus,
wherein the intervention control unit determines whether or not to cause the intervention apparatus to perform the predetermined process on the main content based on the acquired user information.

9. The communication system according to any one of claims 1 to 8,
wherein the intervention control unit causes the intervention apparatus to switch the predetermined process that is executed on the main content.

10. The communication system according to any one of claims 1 to 9, further comprising:
a plurality of intervention apparatuses that execute different predetermined processes on the main content that is exchanged between endpoint apparatus,
wherein the intervention control unit selects an intervention apparatus that executes a predetermined process on the main content.

11. A communication method that is executed by a communication system including an intervention apparatus that performs a predetermined process on a main content that is exchanged between endpoint apparatuses, the method comprising:
controlling whether or not to cause the intervention apparatus to perform the predetermined process on the main content that is exchanged between a first endpoint apparatus and a second endpoint apparatus.

12. A program that causes the communication method according to claim 11 to be executed by at least one apparatus included in the communication system according to claim 11.
